# EUROPEAN PATENT APPLICATION

(11) **EP 4 454 825 A1**
(43) Date of publication of application: **30.10.2024**
(21) Application number: 24172701.5
(22) Date of filing: 26.04.2024
(51) Int. Cl.: B25F 5/02

(54) **POWER MODULE INCLUDING AN INTEGRATED BATTERY INTERFACE FOR POWER TOOL**

(30) Priority: 27.04.2023 US 202363498580 P
(71) Applicant: Black & Decker, Inc., New Britain, CT 06053 (US)
(72) Inventor: VALENTINE, Alastair G., Baltimore, 21212 (US); KUNZ, Eric L., Shrewsbury, 17361 (US); LENNON, William J., Charlotte, 28262 (US); PETRUS, Tyler J., Baltimore, 21211 (US); HAUPT, Michael T., Abingdon, 210098 (US)
(74) Representative: SBD IPAdmin

(57) **Abstract**

A power tool (10) is provided including a battery receptacle disposed at a foot of a handle portion, and an integrated power module (100) disposed at or proximate the foot of the handle portion. The integrated power module includes: a module housing (102) having a base body and a terminal support body (122) extending substantially perpendicularly and integrally from an end of the base body in a downward direction; a circuit board (110) mounted within the module housing over the base body and including an inverter circuit electrically coupled to the motor; a battery terminal block supported by the terminal support body to make a connection with a removable battery pack; and conductive connectors extending from the battery terminal, through the terminal support body and the base body of the module housing, to the circuit board, to supply power from the battery pack to the inverter circuit.

## Description

### RELATED APPLICATION

This patent application claims the benefit of US Provisional Patent Application No. 63/498,580, filed April 27, 2023, which is incorporated herein by reference in its entirety.

### FIELD

This application relates to an integrated battery terminal block, and in particular to an integrated battery terminal block and power module for a power tool.

### BACKGROUND

US Patent Pub. No. 2015/0280515, filed March 30, 2015, content of which is incorporated herein by reference in its entirety, describes a power module for driving a brushless DC (BLDC) motor in a power tool. This module, in an embodiment, includes a planar circuit board that accommodates a controller, power switches configured as a three-phase inverter circuit, a number of corresponding heat sinks mounted on the power switches, and an input unit coupled to a trigger. An input unit that in part includes a trigger switch is mounted on the switch and control module. The trigger switch includes a plunger that carries a wiper. As the trigger switch is moved along its axis, the wiper slides over a potentiometer and conductive tracks. A battery terminal block, located at a foot of the tool, is connected via wires to the power module to supply electric power, through the power module, to the motor. A secondary battery pack is removably coupled to the battery terminal block.

US Patent Publication 2022/0247280, which is incorporated herein by reference, disclose a compact power module designed to fit into a small diameter handle of a power tool. In this design, a housing of the power module, which is also referred to as a potting boat, integrally includes connectors extending from the circuit board to exterior terminals for connection to the motor. Once again, the battery terminal block that receives the battery pack is coupled to the power module via wires.

As power tools are becoming more compact and demand higher power density, compactness and efficiency of various tool components, including the power module, becomes more important. This disclosure addresses the need for a compact and efficient power module that meets the size requirements of modern power tools.

This section provides background information related to the present disclosure and is not necessarily prior art.

### SUMMARY

According to an embodiment, a power tool is provided comprising: a housing including a motor case, a handle portion, and a battery receptacle disposed at a foot of the handle portion opposite the motor case; a motor disposed within the housing; an integrated power module disposed at or proximate the foot of the handle portion. The integrated power module comprises: a module housing having a base body and a terminal support body extending substantially perpendicularly and integrally from an end of the base body in a downward direction; a circuit board mounted within the module housing over the base body and including an inverter circuit electrically coupled to the motor; a battery terminal block supported by the terminal support body, the battery terminal block being arranged within the battery receptacle to make a connection with a removable battery pack; and a plurality of conductive connectors extending from the battery terminal, through the terminal support body and the base body of the module housing, to the circuit board, to supply power from the battery pack to the inverter circuit.

According to an embodiment, a power tool is provided comprising: a tool housing including a battery receiving portion arranged to removably receive a battery pack therein; a motor disposed within the tool housing; and a power module disposed at or proximate the battery receiving portion. The power module includes: a module housing having a base body, exterior walls extending from a first surface of the base body, and a terminal support body formed integrally on a second surface of the base body opposite the exterior walls; a circuit board mounted within the exterior walls of the module housing and including an inverter circuit electrically coupled to the motor; and conductive connectors forming terminals supported by the terminal support body arranged to make an electrical connection with battery terminals the battery pack. In an embodiment, the conductive connectors extend through the terminal support body and are electrically coupled to the circuit board to supply power from the battery pack to the inverter circuit.

In an embodiment, the conductive connectors include first portions that extend from the terminals through the terminal support body substantially perpendicular to the base body, second portions that extend from the first portions through the base body or over the first surface of the base body, and third portions that extend form the second portions and are coupled directly to the circuit board.

In an embodiment, the circuit board includes conductive slots that receive the third portions of the conductive connectors therein.

In an embodiment, the module housing is insert-molded to fully cover at least the second portions of the conductive connectors.

In an embodiment, the inverter circuit comprises a first plurality of power switches mounted on the circuit board along a first array and a second plurality of power switches mounted on the circuit board along a second array. The circuit board further comprises a first conductive slot that couples one of the conductive connectors to the first plurality of power switches, and a second conductive slot that couples another one of the conductive connectors to the second plurality of power switches.

In an embodiment, the second portions pass at least partially over the base body and include angled portions to locate the third portions near the exterior walls.

In an embodiment, the base body includes at least one opening therein formed to facilitate a molding of at least one component formed on the second surface thereof. Further, the power module includes a blocking insert member mounted within the module housing to cover the at least one opening, and a potting compound disposed within the module housing to cover both surfaces of the circuit board.

In an embodiment, the terminal support body is oriented along a plane that extends substantially perpendicularly from the second surface of the main body proximate a distal end thereof.

In an embodiment, the module housing further includes two battery guide rails formed integrally on the second surface of the base body, where the guide rails are arranged to slidingly support the battery pack along an insertion axis.

In an embodiment, the module housing further includes a catch member formed integrally in the second surface of the base body, where the catch member is arranged to engage a latch of the battery pack to releasably lock the battery pack within the battery receiving portion.

In an embodiment, the power module includes two stiffening inserts around which the two battery guide rails are molded.

In an embodiment, the stiffening inserts include side portions located proximate side edges of the base body, rail portions that extend inwardly from the side portions into the battery guide rails, and tab portions that extend inwardly from the side portions into the base body.

In an embodiment, the power module includes a vibration isolation element comprising resiliently deformable material mounted between an interior surface of the battery receiving portion and at least a portion of the module housing to allow relative movement between the power module and the tool housing.

According to an embodiment, a power tool is provided comprising: a tool housing including a battery receiving portion arranged to removably receive a battery pack therein; a motor disposed within the tool housing; and a power module disposed at or proximate the battery receiving portion. The power module includes: a module housing having a base body and exterior walls extending from a first surface of the base body, and two battery guides rails formed integrally on a second surface of the base body opposite the exterior walls to slidingly support the battery pack along an insertion axis; and a circuit board mounted within the exterior walls of the module housing and including an inverter circuit electrically coupled to the motor.

In an embodiment, the power module includes two rail walls extending from lateral edges of the base body substantially perpendicular to the base body, where the two battery guide rails extend inwardly from the two rail walls.

In an embodiment, the power module includes two stiffening inserts around which the two rail walls and the two battery guide rails are molded.

In an embodiment, the two stiffening inserts include two side portions located proximate side edges of the base body around which the two rail walls are molded, two rail portions that extend inwardly from the two side portions around which the two battery guide rails are molded, and tab portions that extend inwardly from the two side portions into the base body.

In an embodiment, the module housing further includes a catch member formed integrally in the second surface of the base body, where the catch member is arranged to engage a latch of the battery pack to releasably lock the battery pack within the battery receiving portion.

In an embodiment, the power module further includes a vibration isolation element comprising resiliently deformable material mounted between an interior surface of the battery receiving portion and at least a portion of the module housing to allow relative movement between the power module and the tool housing.

In an embodiment, the module housing comprises side protrusions projecting laterally from two side walls of the exterior walls, and the vibration isolation element comprises receptacles that engage the side protrusions to secure the vibration isolation element to the module housing.

In an embodiment, the battery receiving portion comprises two side support members that extend inwardly and engage a lower end of the vibration isolation element adjacent the two battery guides rails.

In an embodiment, the base body includes at least one opening therein formed to facilitate a molding of the battery guide rails, and the power module further includes: a blocking insert member mounted within the module housing to cover the at least one opening, and a potting compound disposed within the module housing to cover both surfaces of the circuit board.

In an embodiment, the power module further comprises a terminal support body formed integrally on the second surface of the base body that supports a plurality of terminals therein arranged to make an electrical connection with a plurality of battery terminals of the battery pack, where the two battery guides rails extend longitudinally from the terminal support body proximate two side edges of the base body.

In an embodiment, the power module further includes conductive connectors extending from the terminals through at least a portion of the module housing to make an electrical connection with the circuit board.

In an embodiment, the base body includes at least one opening therein formed to facilitate a molding of the battery guide rails, where at least one of the conductive connectors is bent at an angle to overlap at least a portion of the opening.

In an embodiment, the battery receiving portion includes a lateral support member that extend inwardly from a rear portion thereof and engage a lower end of the terminal support body.

According to an embodiment, a power tool is provided comprising: a tool housing including a battery receiving portion arranged to removably receive a battery pack therein; a motor disposed within the tool housing; and a power module disposed at or proximate the battery receiving portion. The power module includes: a module housing having a base body and a plurality of exterior walls projecting from a first surface of the base body, a circuit board mounted within the exterior walls of the module housing, and a battery interface formed integrally on a second surface of the base body opposite the circuit board. The battery interface is configured to secure a battery pack to the battery receiving portion and facilitate an electrical connection between the battery pack and the circuit board.

In an embodiment, the battery interface includes two battery guides rails formed integrally on a second surface of the base body to slidingly support the battery pack along an insertion axis.

In an embodiment, the battery interface includes a catch member formed integrally in the second surface of the base body. The catch member is arranged to engage a latch of the battery pack to releasably lock the battery pack within the battery receiving portion.

In an embodiment, the battery interface includes a terminal support body formed integrally on the second surface of the base body that supports a plurality of terminals therein arranged to make an electrical connection with a plurality of battery terminals of the battery pack.

According to an embodiment, a power tool is provided comprising: a tool housing including a battery receiving portion arranged to removably receive a battery pack therein; a motor disposed within the tool housing; a power module disposed within the tool housing to supply electric power from the battery pack to the motor, where the power module includes a module housing having a base body and a plurality of exterior walls, and a circuit board disposed within the module housing; and a vibration isolation element comprising resiliently deformable material mounted between an interior surface of the tool housing and at least a portion of the module housing to allow relative movement between the power module and the tool housing.

In an embodiment, the module housing includes side protrusions projecting laterally from two side walls of the exterior walls, and the vibration isolation element comprises receptacles that engage the side protrusions to secure the vibration isolation element to the module housing.

In an embodiment, the vibration isolation element includes a base portion and two side portions extending approximately perpendicularly from the base portion, where the two side portions are arranged to abut two side walls of the power module.

In an embodiment, the base portion is arranged to abut a lateral wall of the plurality of exterior walls.

In an embodiment, the base portion is arranged to abut the base body.

In an embodiment, the vibration isolation element further includes a lip portion that covers at least a portion of an end of the exterior walls.

In an embodiment, the module housing comprises a plurality of posts, and the lip portion includes a plurality of receptacles that engage the plurality of posts to secure the vibration isolation element to the module housing.

Embodiments and/or aspects of the invention may include any combination of one of more features described above or discussed in detail in this disclosure.

### DRAWINGS

The various advantages of the embodiments will become apparent to one skilled in the art by reading the following specification and appended claims, and by referencing the following drawings, in which:
FIG. 1A depicts a partial view of a power tool incorporating a power module having an integrated battery terminal block and potting boat (herein referred to as "integrated power module"), according to an embodiment;
FIG. 1B depicts a perspective view of a power tool battery pack, according to an embodiment;
FIGs. 2A and 2B depict frontal and perspective views of the integrated power module within the power tool respectively, according to an embodiment;
FIGs. 3A-3C depict perspective views of the integrated power module, according to an embodiment;
FIGs. 4A and 4B depict exploded perspective views of the integrated power module, according to an embodiment;
FIG. 5 depicts a perspective view of the integrated power module potting boat, according to an embodiment;
FIGs. 6A-6C depict perspective views of the integrated power module translucently showing the potting boat, according to an embodiment;
FIGs. 7A and 7B depict connectors and integrated battery terminals of the integrated power module, according to an embodiment;
FIG. 8 depicts an axial cross-sectional view of the integrated power module, according to an embodiment;
FIG. 9 depicts a side view of a power tool with a front housing half removed, incorporating an integrated power module having a potting boat and an integrated battery interface including battery guide rails, according to an alternative embodiment;
FIG. 10A and 10B depict bottom perspective views of the integrated power module, according to an embodiment;
FIG. 11 depicts a top perspective view of the integrated power module, according to an embodiment;
FIG. 12 depicts a partially exploded view of a vibration isolation member relative to the integrated power module, according to an embodiment;
FIG. 13A and 13B depict partially-exploded views of the integrated power module and a circuit board mounted within the potting boat, according to an embodiment;
FIG. 14 depicts a side cross-sectioned perspective view of the potting boat including the circuit board and potting compound, according to an embodiment;
FIGs. 15A and 15B depict perspective views of the integrated power module with the potting boat being shown translucently, according to an embodiment;
FIGs. 16A and 16B depict connectors, integrated battery terminals, and stiffening inserts of the integrated power module, according to an embodiment;
FIG. 17 depicts a partially-exploded view showing a blocking insert member prior to being mounted relative to the potting boat, according to an embodiment;
FIG. 18 depicts a perspective view of the potting boat after the blocking insert member is mounted, according to an embodiment;
FIG. 19 depicts a lower perspective view of a battery receiving portion of the power tool housing the integrated power module, according to an embodiment;
FIG. 20 depicts a perspective view of the integrated power module within the battery receiving portion, with only a rear housing half of the power tool shown, according to an embodiment;
FIG. 21A and 22B depict partially exploded views of the integrated power module relative to the rear housing half, according to an embodiment;
FIGs. 22A and 22B depicts perspective views of a power module including a vibration isolation member, according to an alternative embodiment of the invention;
FIG. 23 depicts a partially exploded view of the vibration isolation member relative to the power module, according to an embodiment;
FIG. 24 depicts a perspective view of the power module including a module housing shown translucently to expose conductive connectors therein, according to an embodiment; and
FIG. 25 depicts a top view of the module housing including a circuit board, according to an embodiment.

Corresponding reference numerals indicate corresponding parts throughout the several views of the drawings.

### DESCRIPTION

Example embodiments will now be described more fully with reference to the accompanying drawings. The following description illustrates the claimed invention by way of example and not by way of limitation. The description clearly enables one skilled in the art to make and use the disclosure, describes several embodiments, adaptations, variations, alternatives, and uses of the disclosure, including what is presently believed to be the best mode of carrying out the claimed invention. Additionally, it is to be understood that the disclosure is not limited in its application to the details of construction and the arrangements of components set forth in the following description or illustrated in the drawings. The disclosure is capable of other embodiments and of being practiced or being carried out in various ways. Also, it is to be understood that the phraseology and terminology used herein is for the purpose of description and should not be regarded as limiting.

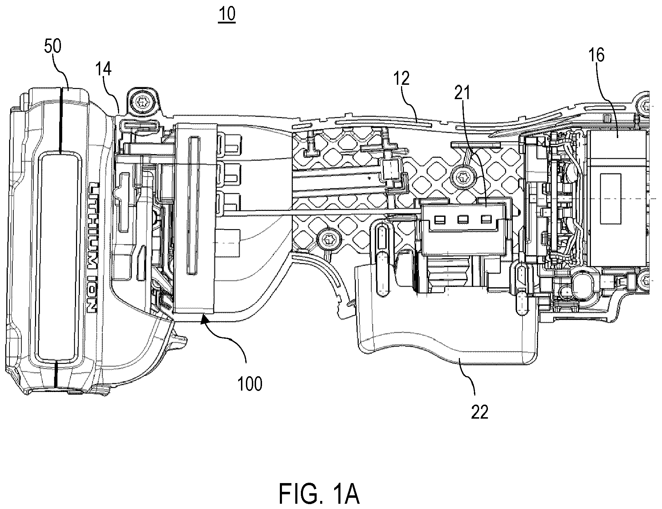

FIG. 1A depicts a partial view of an exemplary power tool 10, according to an embodiment. The power tool 10 may include a housing 12, a battery receiving portion 14 that receives a removable battery pack 50, an electric motor 16 housed within a motor case portion of the housing, a trigger switch 22 mounted on the housing 12 and engageable by a tool operator, a switch assembly 21 that is in engagement with the trigger switch 22, and an electronic power module (herein referred to as "integrated power module" or simply "power module") 100 that, as describe in this disclosure in detail, integrally incorporates battery terminals of the battery receiving portion 14 and controls supply of electric power from the battery pack 50 to the motor 16 based on the travel displacement of the trigger switch 22 (i.e., input from the switch assembly 21). In an embodiment, the motor 16 may be a brushless direct-current (BLDC) motor including a stator and a rotor rotatably received within the stator. In an embodiment, the integrated power module 100 includes a programmable controller, such as a microcontroller, and electronic power switching components for regulating the supply of power from the battery pack 50 to motor 16. In an embodiment, integrated power module 100 is disposed at or proximate the battery receiving portion 14. In an embodiment, battery receiving portion 14, in addition to supporting battery terminals discussed below, includes battery rails and other support structure for releasably receiving and supporting the battery pack 50.

It must be understood that, while FIG. 1A illustrates a power tool such as a grinder having a brushless motor accommodated within an elongated body, the teachings of this disclosure may be used in any power tool, including, but not limited to, drills, saws, nailers, fasteners, impact wrenches, grinders, sanders, cutters, etc. Also, teachings of this disclosure may be used in any other type of tool or product that include a rotary electric motor, including, but not limited to, mowers, string trimmers, vacuums, blowers, sweepers, edgers, etc.

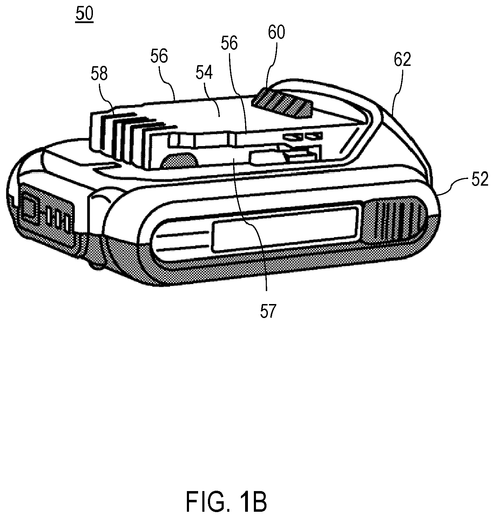

FIG. 1B depicts a perspective view of a power tool battery pack 50, according to an embodiment. In an embodiment, battery pack 50 includes a housing 52 that houses one or more rechargeable lithium-based battery cells therein interconnected in a series and/or parallel configuration to achieve a desired output volage and current capacity. A top portion 54 projects from a top of the housing 52 and is shaped for coupling with the battery receiving portion 14 of the power tool 10. The top portion 54 includes a set of rail portions 56 projecting laterally from the top portion 54. When the battery pack 50 is slidingly coupled with the battery receiving portion 14 of the power tool 10, tool-side guide railings are captured within recess portions 57 formed below the rail portions 56 to fix the battery pack 50 in lateral and up-down directions. In addition, the top portion 54 includes a terminal block 58 formed one an end of the top portion that includes multiple slots through which a number of terminals of the battery pack 50 (e.g., B+, B-, temperature, stack voltage, etc.) are accessible for electric coupling with a corresponding terminal block of the power tool 10. A latch 60 is located proximate the other end of the top portion 54 and projects out of an opening of the top portion 54 to lock in with a corresponding catch provided on the battery receiving portion 14 of the power tool 10 to fix the battery pack within the battery receiving portion 14 along the insertion axis. The latch 60 is actuated via a push-button (not shown) located on a button housing 62 located rearward of the top portion 54.

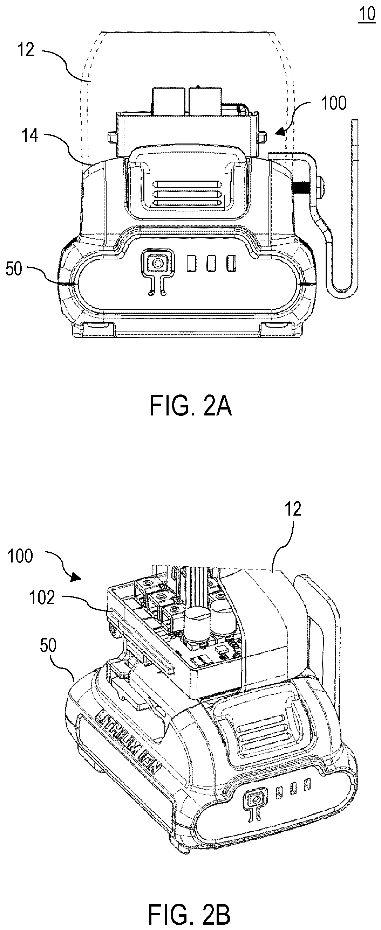

FIGs. 2A and 2B depict perspective views of the integrated power module 100 within the power tool 10, according to an embodiment. In an embodiment, the integrated power module 100 includes a module housing (also referred to herein as the potting boat) 102 including four exterior walls defining an open upper end. The potting boat 102 has a greater planar surface area than at least a portion of the handle 12, but smaller than a planar surface area of the battery receiving portion 14. In an embodiment, the potting boat 102 has an orientation that is substantially perpendicular to an axis of the handle 12 and substantially parallel to a receiving axis of the battery pack 50. In an embodiment, the potting boat 102 may form an angle of between 60 to 90 degrees relative to the axis of the handle 12. The receiving axis of the battery pack 50 refers to an axis along which the battery pack 50 is slidingly received and locked into the battery receiving portion 14. It must be understood that depending on the power tool shape and specifications, integrated power module 100 may have a different size or orientation than the example shown in herein. As described herein in detail, potting boat 102 integrally incorporates a battery terminal block that is coupled to the battery pack 50.

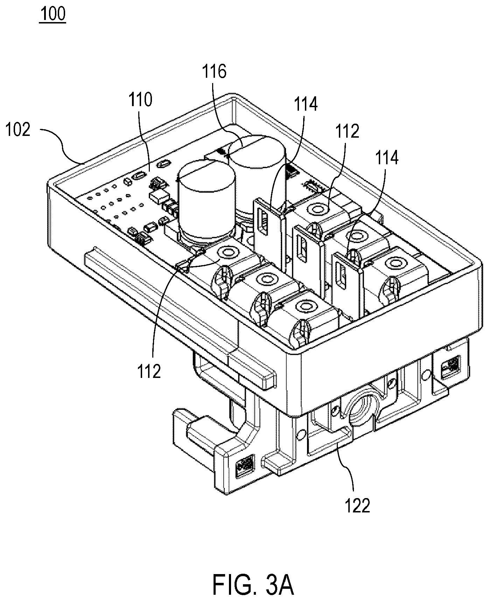

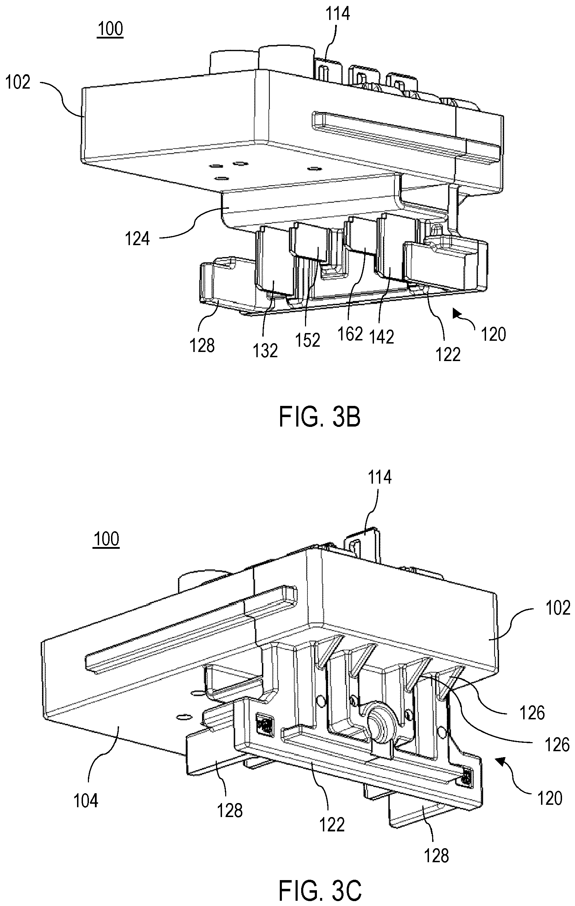

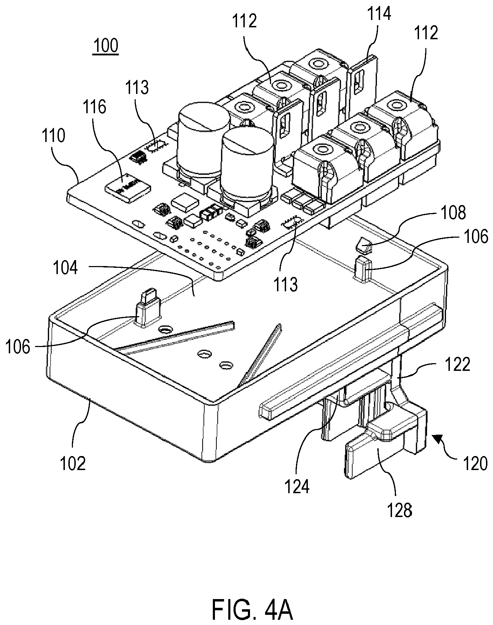

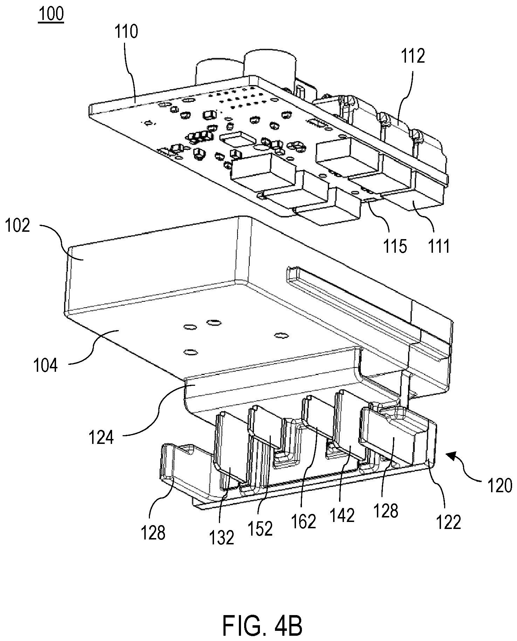

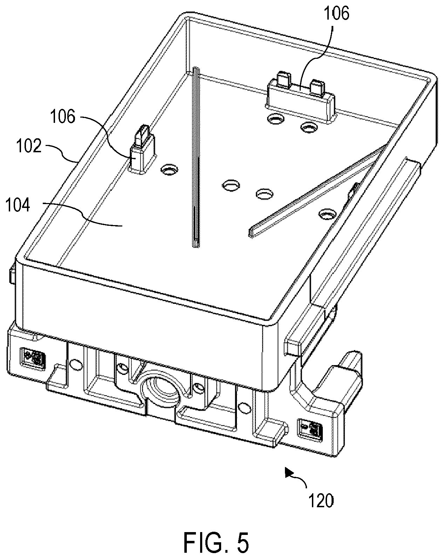

FIGs. 3A-3C depict perspective views of the integrated power module 100, according to an embodiment. FIGs. 4A and 4B depict exploded perspective views of the integrated power module 100, according to an embodiment. FIG. 5 depicts a perspective view of the integrated power module potting boat, according to an embodiment.

In an embodiment, integrated power module 100 includes a printed circuit board (PCB) 110 received through the open end of the potting boat 102 and secured within the exterior walls of the potting boat 102. In an embodiment, PCB 110 includes a plurality of power switches 111 mounted on its lower surface, and a plurality of discrete heat sinks 112 each mounted on its upper surface opposite a respective power switch 111 to transfer heat away from the power switch 111. In an embodiment, the power switches 111 may be solid-state semiconductor switches such as Field-Effect Transistors (FETs) connected as an inverter circuit, such as a three-phase inverter circuit including high-side and low-side power switches for driving a three-phase electronically commutated motor. In an embodiment, a plurality of power output terminals 114 are mounted on the PCB 110 and project substantially perpendicularly from its upper surface between the heat sinks 112. The power output terminals 114 are electrically connected to the output of the inverter circuit and supplies power from the inverter circuit to the motor via a plurality of electric wires (not shown).

It should be understood that power switches 111 and heat sinks 112 may be arranged in other alternative configurations. In an example, power switches 111 may be disposed on the same surface of the PCB 110 as the heat sinks 112, with heat sinks 112 substantially covering the upper surfaces and at least two sides of the power switches 111.

In an embodiment, integrated power module 100 further includes a controller 116, which may be a programmable microcontroller or alike programmed to control a switching operation of the power switches, mounted on the PCB 110. In an embodiment, the controller 116 controls a pulse-width modulation (PWM) duty cycle of the power switches to control the amount of voltage supplied through the power switches to the motor. In an embodiment, the controller 116 may do so based on the amount of trigger depression by the operator or based on load applied to the power tool in a closed-loop speed control system. In an embodiment, the controller 116 is coupled to a gate driver circuit (not shown) mounted on the PCB 110 that applies the necessary voltage needed to drive the power switches. The controller 116 and the gate driver circuit may be provided as two discrete chips or integrated into a single chip unit.

In an embodiment, the PCB 110 is received through the open end of the potting boat 102 and secured at a distance from a base body 104 of the potting boat 102. In an embodiment, potting boat 102 includes multiple posts 106, each e.g., 2 to 6 mm in height, projecting from the base body 104 along the inner surfaces of the exterior walls and arranged to spatially support the PCB 110 relative to the base body 104. In an embodiment, the potting boat 102 may further includes one or more snaps 108 located to engage and retain the upper surface of the PCB 110 to securely hold the PCB 110 on the posts 106. In an embodiment, the potting boat 102 is filled with a potting compound (not shown) that covers both surfaces of the PCB 110 including most of the electronic components, but it does not cover the upper surfaces of the heat sinks 112 and the output terminals 114.

For more details on the inverter circuit configuration and other details of the PCB 110 components, reference is made to US Patent Publication No. 2020/0006021, which is incorporated herein by reference in its entirety.

In an embodiment, potting boat 102 additionally integrally includes a battery terminal block 120. Terminal block 120 is formed integrally as a part of the potting boat 102 during the injection-molding process of the potting boat 102 and projects downwardly (i.e., opposite the side walls) from the base body 104 proximate one end of the potting boat 102. In an embodiment, terminal block 120 includes a terminal support body 122 that project substantially perpendicularly from the base body 104. In an embodiment, a support member 124 located between a front side of the base body 104 and the terminal support body 122 provides reinforced structural support for the terminal support body 122. In an embodiment, multiple ribs 126 extend between a rear side of the base body 104 and the terminal support body 122 to further strengthens structural support for the terminal support body 122.

In an embodiment, terminal block 120 accommodates a set of battery terminals 132, 142, 152 and 162 arranged to make electrical connections with corresponding battery connectors of the battery pack 50. In an embodiment, battery terminals 132, 142, 152 and 162 are respectively coupled to B+, B-, thermistor, and split-stack battery connectors of the battery pack 50.

In an embodiment, terminal block 120 further includes a pair of engagement arms 128, for engaging an upper surface (not shown) of the battery pack 50. The engagement arms 128 help align the battery connectors of the battery pack 50 with the battery terminals 132, 142, 152 and 162 when mounting the battery pack 50 to the power tool 10.

For a detailed discussion of a conventional terminal block design and its connection to a power tool battery pack, reference is made to PCT Publication No. WO2022053643A1, which is incorporated herein by reference in its entirety.

In an embodiment, the potting boat 102 accommodates multiple conductive connectors routed from the PCB 110 to the terminal block 120 and integrally forming the battery terminals 132, 142, 152 and 162 for connection to the battery pack 50, as described below in detail.

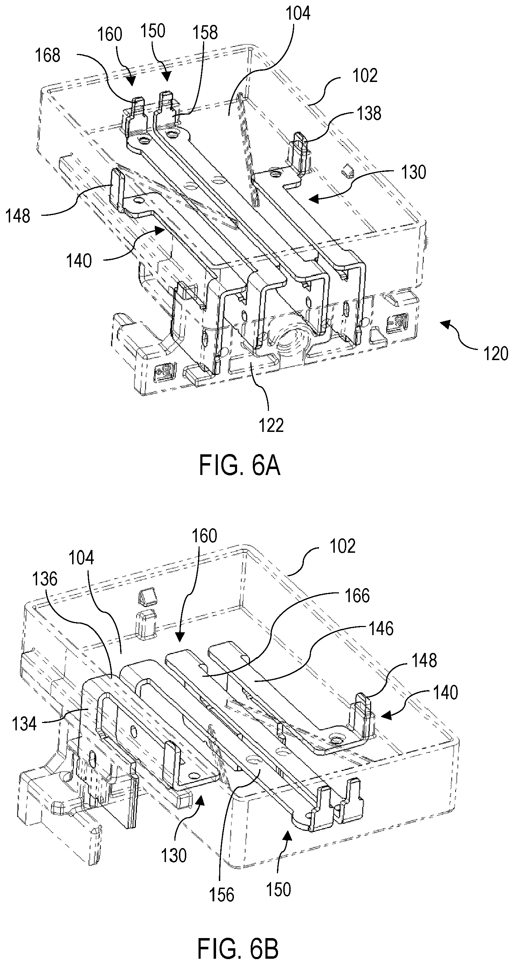

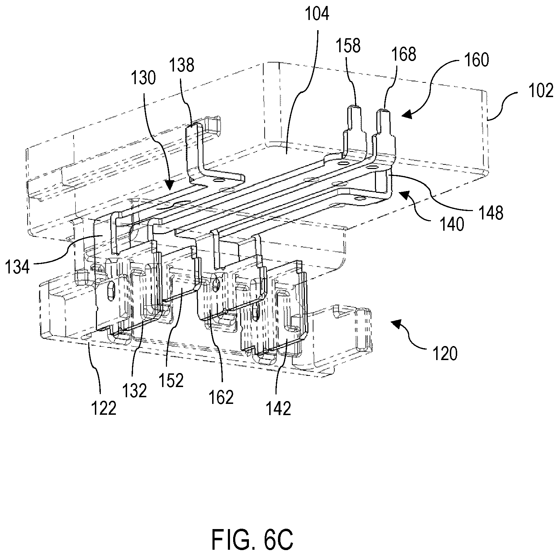

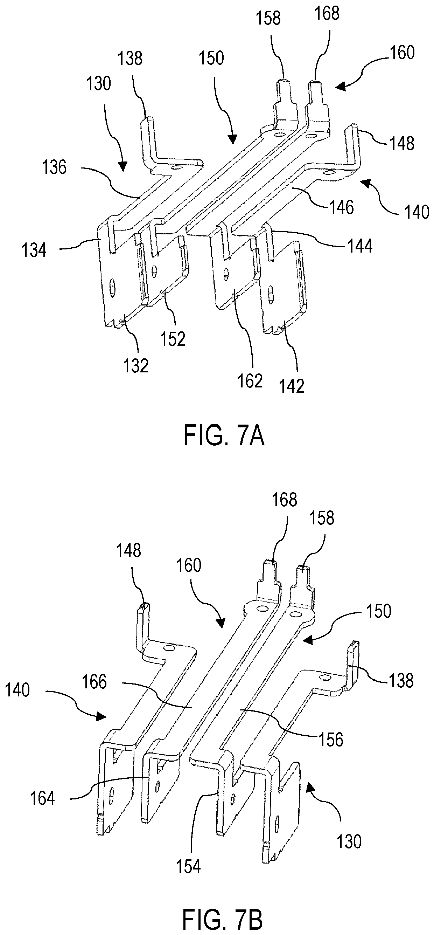

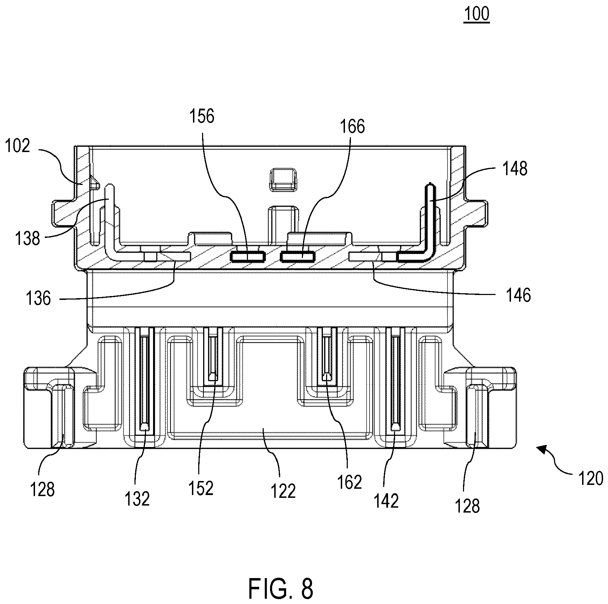

FIGs. 6A-6C depict perspective views of the integrated power module showing the potting boat 102 translucently, according to an embodiment. FIGs. 7A and 7B depict conductive connectors 130, 140, 150 and 160 including the integrated battery terminals 132, 142, 152 and 162, according to an embodiment. FIG. 8 depicts a cross-sectional view of the integrated power module 100 showing the connectors 130, 140, 150 and 160 within the base body 104 of the potting boat 201, according to an embodiment.

In an embodiment, connectors 130 and 140, which include battery terminals 132 and 142 respectively and are coupled to B+ and B- connectors of the battery pack 50, may be made of highly conductive material such as copper. In an embodiment, connectors 130 and 140 additionally respectively include first portions 134 and 144 that extend upright from the battery terminals 132 and 142 through the terminal support body 122; second portions 136 and 146 that extend substantially perpendicularly from upper ends of the first portions 134 and 144 though the base body 104 along a longitudinal axis of the potting boat 102 and include side portions that extend perpendicularly outward towards their adjacent side walls, and third portions 138 and 148 that extend substantially perpendicularly upright from ends of the side portions of the second portions 136 and 146 adjacent the side walls of the potting boat 102 and through respective posts 106. In an embodiment, upper ends of the third portions 138 and 148 extend out of the posts 106 and are received into corresponding conductive slots 113 of the PCB 110 (FIG. 4A) to make electrical connections with the PCB 110. In this manner, connectors 130 and 140 electrically couple the B+ and B- connectors of the battery pack 50 to the PCB 110. In an embodiment, the second portions 136 and 146 extend below the rows of power switches 111 and couple to the PCB 110 adjacent the rows of the power switches 111 to supply power directly to the inverter circuit.

In an embodiment, connectors 150 and 160, which include battery terminals 152 and 162 respectively and are coupled to thermistor and split-stack connectors of the battery pack 50, may be made of conductive material such as copper or steel. In an embodiment, connectors 150 and 160 additionally respectively include first portions 154 and 164 that extend upright from the battery terminals 152 and 162 through the terminal support body 122; second portions 156 and 166 that extend substantially perpendicularly from upper ends of the first portions 154 and 164 though the base body 104 along a longitudinal axis of the potting boat 102 to near the distal side wall of the potting boat 102, and third portions 158 and 168 that extend substantially perpendicularly upright from ends of the second portions 156 and 166 through a post 106. In an embodiment, upper ends of the third portions 158 and 168 extend out of the post 106 and are received into corresponding conductive slots 115 of the PCB 110 (FIG. 4B) to make electrical connections with the PCB 110. In this manner, connectors 150 and 160 electrically couple the thermistor and split-stack connectors of the battery pack 50 to the controller 116 of the PCB 110. This allows the controller 116 to monitor the temperature and voltage of the battery pack 50 and take corrective action (e.g., cut off power from the battery pack, ramp down current, etc.) if the temperature or a stack voltage falls outside an acceptable range.

In an embodiment, during the manufacturing process, the connectors 130, 140, 150 and 160 are initially stamped and arranged in the above-described patterns and the potting boat 102 is formed using an insert-molding process to capture the above-described portions of the connectors 130, 140, 150 and 160. Accordingly, in an embodiment, the only parts of the connectors 130, 140, 150 and 160 that are not covered by the potting boat 102 are the battery terminals 132, 142, 152 and 162 for connection to the battery pack 50 and upper ends of the third portions 138, 148, 158 and 168 for connection to the PCB 110. In this manner, the potting boat 102 provides a robust, reliable, and cost-effective assembly that integrally includes the terminal block and is easy to manufacture and assemble.

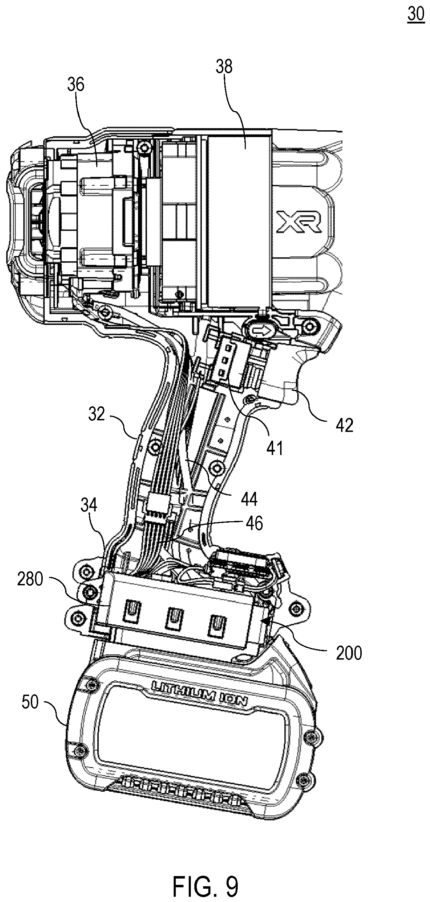

Another embodiment of the invention is described herein with reference to FIGs. 9-20.

FIG. 9 depicts a side view of a power tool 30 with a front housing half removed, incorporating an integrated power module 200, according to an alternative embodiment of the invention. Power tool 30 includes a tool housing 32 formed by two housing halves in a clamshell arrangement. The tool housing 32 includes an upper body that houses an electric motor 36 and supports a transmission and/or impact mechanism 38 that imparts a rotary output from the motor 36 to an output member (not shown). The tool housing 32 further includes a handle portion extending below the upper body that houses a variable-speed switch assembly 41 and supports a trigger switch 42 below the upper body in selective actuating contact with the variable-speed switch assembly 41. The handle 32 also forms a battery receiving portion 34 at a lower end of the housing 32. The battery receiving portion 34 is arranged to slidingly receive and connect with the battery pack 50. The integrated power module 200 is mounted within the battery receiving portion 34. A plurality of power wires 44 are routed from the integrated power module 200 to the motor 36 to supply electric power from the battery pack 50 to the motor 36. A plurality of signal wires 46 are also routed from the integrated power module 200 to various power tool components. These may include, e.g., a variable-speed signal from the variable-speed switch assembly 41, Hall (position) signals from the electric motor 36, etc.

Like the previous embodiment, the integrated power module 200 comprises a potting boat and an integrated battery interface including a battery terminal block that electrically couples to the terminal block 58 of the battery pack 50. In addition to these features, however, the potting boat further includes a set of guide rails that slidingly engages the rail portions 56 of the battery pack 50 (FIG. 1A), and a catch that latches onto latch 60 of the battery pack 50, to releasably secure and fix and the battery pack 50. In an embodiment, a vibration isolation element 280 is additionally provided partially around the integrated power module 200 to absorb some level of impact and vibration exerted by the motor 36 and/or the output member, and to protect the integrated power module 200 and the battery pack 50 from damage due to high impact and vibration. These features are described herein in detail.

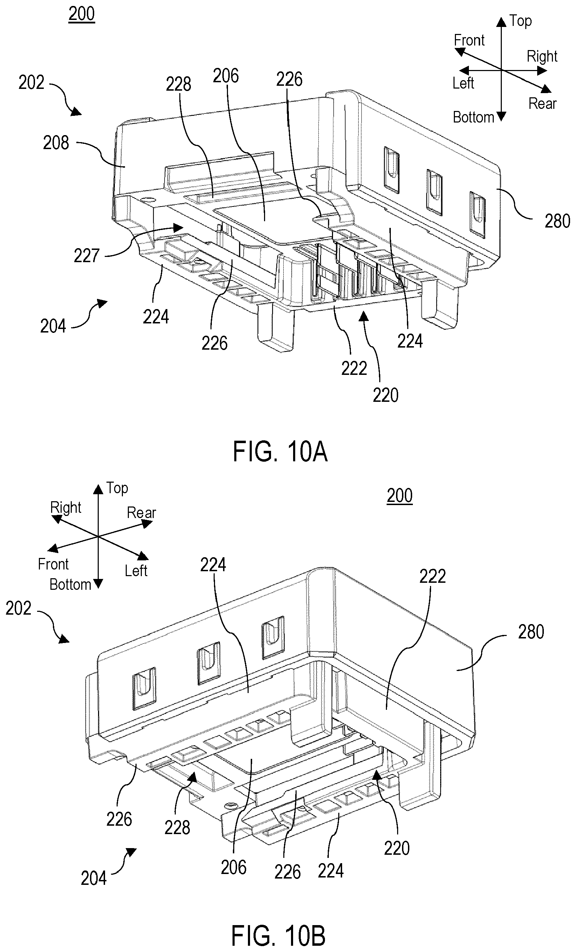

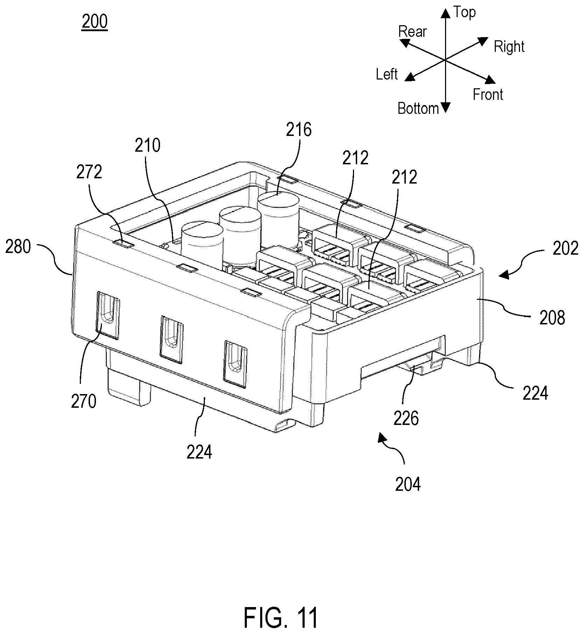

FIG. 10A and 10B depict bottom perspective views of the integrated power module 200, according to an embodiment. FIG. 11 depicts a top perspective view of the integrated power module, according to an embodiment.

As shown in these figures, according to an embodiment, the integrated power module 200 includes a module housing (also referred to as a potting boat) 202 and a battery interface 204 integrally formed below the potting boat 202.

In an embodiment, the potting boat 202 includes a base body 206 and four exterior walls 208 projecting from the base body 206 and defining an open upper end opposite the base body 206. In an embodiment, a printed circuit board (PCB) 210 is received through the open end and secured within the potting boat 202. The circuit board 210 includes a plurality of power switches mounted on its lower surface, and a plurality of discrete heat sinks 212 each mounted on its upper surface opposite a respective power switch to transfer heat away from the power switches through the open end. In addition, the circuit board 210 includes a controller, capacitors 216, and all the other electronics (e.g., voltage regulator, gate drivers, etc.) and control features required to regulate the supply of power from the battery pack 50 to the electric motor. The features of PCB 210 are similar in many respect to those of PCB 110 previous described.

In an embodiment, the battery interface 204 includes a battery terminal block 220 and battery guide rails 226 that project integrally from a bottom surface of the base body 206 opposite the potting boat 202. Terminal block 220 and the battery guide rails 226 are formed integrally as a part of the potting boat 202 during the injection-molding process of the potting boat 202.

In an embodiment, the terminal block 220 projects downwardly (i.e., opposite the side walls) from a distal end of the base body 206 and includes a terminal support body 222 that project substantially perpendicularly from the distal (rear) end of the base body 206 (or proximate the distal end of the base body 206). A plurality of tool-side battery terminals are supported by the terminal support body 222, as discussed later in detail, which electrically contact the battery-side terminals of the terminal block 58 of the battery pack 50 when the battery pack is coupled.

In an embodiment, the battery interface 204 includes two rail walls 224 that project downwardly from lateral edges of the base body 206. The rail walls 224 extend from the terminal support body 222, in parallel and along the lateral edges of the base body 206, to a location proximate the front end of the base body 206. The guide rails 226 project inwardly (i.e., parallel to the base body 206) from lower ends of the rail walls 224 and extend longitudinally from the terminal support body 222 to locations proximate the front ends of the rail walls 224. The guide rails 226, the rail walls 224, and the base body 206, cooperatively form grooves 227 therein. The groove 227 engage the rail portions 56 of the battery pack 50 when the battery pack is slidingly received into the battery interface 204, allowing the guide rails 226 to be slidingly received within the recess portions 57 of the battery pack 50.

In an embodiment, the battery interface 204 additionally includes a catch 228 formed within a lower surface of the base body 206 and near the front end of the base body 206. When the battery pack 50 is at its fully-inserted position, where the terminal block 58 makes full electrical contact with terminal block 220 of the battery interface 204, the latch 60 of the battery pack 50 engages the catch 228 to lock the battery pack 50 to the battery interface 204.

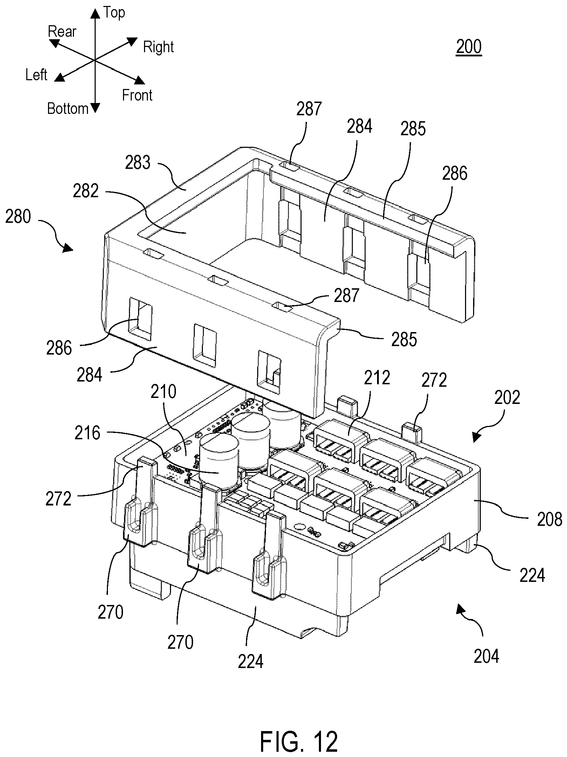

FIG. 12 depicts a partially exploded view of vibration isolation member 280 relative to the rest of the integrated power module 200, according to an embodiment. Reference is initially made to US Patent No. 11,890,740, which is incorporated herein by reference in its entirety, as an example of a vibration isolator use to isolate and protect a battery pack interface from vibration. In an embodiment, the vibration isolation member 280 provides similar protection for both the power module components and the battery pack interface. The vibration isolation member 280 may be made of resilient deformable material, for example, a thermoplastic elastomer (TPE), rubber material, or other plaint, compliant, flexible material to absorb shock and vibration imparted by the power tool output member, the transmission and/or impact assembly, and/or the motor. In this manner, the vibration isolation member 280 protects the components of the integrated power module 200, including the switching and control circuitry, the battery interface 204, and the battery pack 50, from damage due to excessive shock and vibration.

As shown in FIG. 12, and with continued reference to FIGs. 10A-11, vibration isolation member 280 is designed to wrap around at least portions of at least three of the four exterior walls 208 of the potting boat 202. In an embodiment, vibration isolation member 280 includes a base portion 282 arranged to cover a rear one of the exterior walls 208 of the potting boat 202, and two side portions 284 that extend from the base portion 282 and cover two side walls of the exterior walls 208. Further, in an embodiment, the vibration isolation member 280 includes lip portions 283 and 285 that project inwardly from the base portion 282 and side portions 284 respectively to cover a top edge of the three exterior walls 208. As will be described later in detail, this arrangement allows for six degrees of movement of the integrated power module 200, and therefore the battery pack 50, relative to the power tool housing 12, about the X (rear-front), Y (left-right) and Z (top-down) axes, to fully protect the module components and the battery pack 50 from excessive vibration and impact produced by the power tool in any direction.

In an embodiment, the potting boat 202 includes multiple side protrusions 270 projecting laterally from the two side walls of the exterior walls 208, and multiple of corresponding posts 272 projecting in the upright position from the two side walls. The vibration isolation member 280 includes a first set of receptacles 286 formed in the side portions 284 and a second set of receptacles 287 formed in the lip portions 85 arranged to tightly receive the sets of side protrusions 270 and the set of posts 272 respectively. During assembly, as the vibration isolation member 280 is mounted around the potting boat 202, the sets of side protrusions 270 and the set of posts 272 are located within the first set of receptacles 286 and the second set of receptacles 287 respectively to properly secure the vibration isolation member 280.

It is noted that the above-described embodiment of the vibration isolation member 280 is exemplary and alternative designs and configurations of the vibration isolation member 280 are within the scope of this disclosure. For example, the potting boat 202 may be provided without the set of posts 272 for lateral retention, and the vibration isolation member 280 may wrap around all four exterior walls 208. In an example, the potting boat 202 may be provided without the set of protrusions 270 for retention along the z-axis, and the vibration isolation member 280 may be designed to include a protrusion that engages a recessed portion of the potting boat 202. In an example, the vibration isolator 280 may include a lower lip that engages a stepped recess formed between the exterior wall 208 of the potting boat 202 and the side wall 224 of the battery interface 204. In another example, the vibration isolation member 280 may be designed to wrap around the rail walls 224 and the terminal support body 222 of the battery interface 204, instead of or in addition to the potting boat 202.

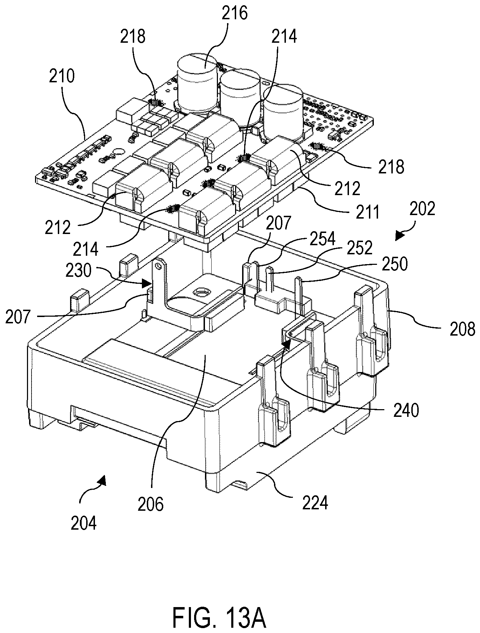

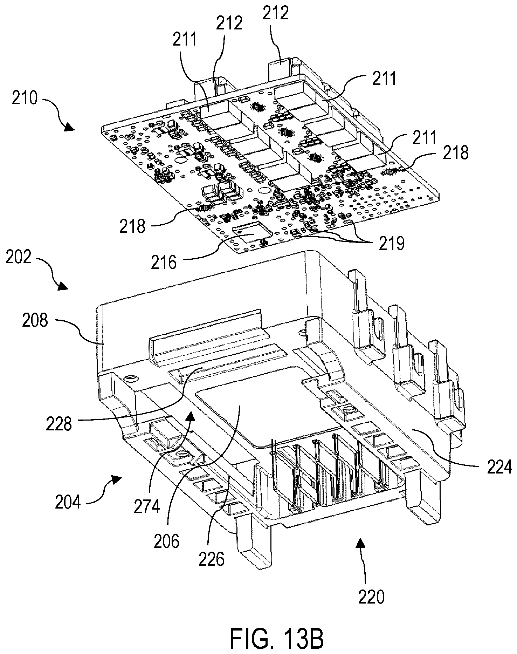

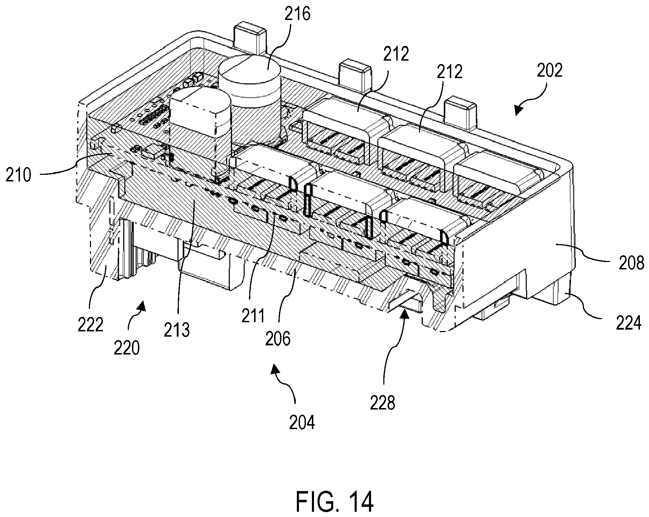

FIG. 13A and 13B depict partially-exploded views of the integrated power module and a circuit board mounted within the potting boat, according to an embodiment. FIG. 14 depicts a cross-sectioned perspective view of the potting boat including the circuit board and potting compound, according to an embodiment.

In an embodiment, PCB 210 includes similar features as PCB 110 previously described, including a plurality of power switches 211 mounted on its lower surface, and a plurality of discrete heat sinks 212 each mounted on its upper surface opposite a respective power switch 211 to transfer heat away from the power switch 211. In an embodiment, the power switches 211 may be solid-state semiconductor switches such as Field-Effect Transistors (FETs) connected as an inverter circuit, such as a three-phase inverter circuit including high-side and low-side power switches for driving a three-phase electronically commutated motor. In an embodiment, there are a total of twelve FETs mounted on the PCB 210 to form the inverter circuit, where each switch of the inverter circuit includes two FETs coupled together in parallel to increase the current capacity of the inverter circuit. In an embodiment, a plurality of power output terminals 214 are formed as conductive openings in the PCB 210 between the two arrays of heat sinks 212. The power output terminals 114 are electrically connected to the output of the inverter circuit and supplies power from the inverter circuit to the motor via electric wires (not shown).

It should be understood that power switches 211 and heat sinks 212 may be arranged in other alternative configurations. In an example, power switches 211 may be disposed on the same surface of the PCB 210 as the heat sinks 212, with heat sinks 212 substantially covering the upper surfaces and at least two sides of the power switches 211.

In an embodiment, integrated power module 200 further includes a controller 216, which may be a programmable microcontroller or alike programmed to control a switching operation of the power switches, mounted on a lower surface of the PCB 210. In an embodiment, like controller 116 previously discussed, controller 216 controls a pulse-width modulation (PWM) duty cycle of the power switches to control the amount of voltage supplied through the power switches to the motor. In an embodiment, the controller 216 may do so based on the variable-speed signal from the variable-speed switch assembly 41, and/or based on load applied to the power tool in a closed-loop speed control system. In an embodiment, the controller 216 is coupled to a gate driver circuit (not shown) mounted on the PCB 210 that applies the necessary voltage needed to drive the power switches. The controller 216 and the gate driver circuit may be provided as two discrete chips or integrated into a single chip unit.

In an embodiment, the PCB 210 is received through the open end of the potting boat 202 and secured within the exterior walls 208 at a distance from a base body 206 of the potting boat 202. In an embodiment, potting boat 202 includes one or more posts 207, each e.g., 2 to 6 mm in height, projecting from the base body 206 along the inner surfaces of the exterior walls 208 that are arranged to spatially support the PCB 210 relative to the base body 206. In an embodiment, the potting boat 202 is filled with a potting compound 213 that covers both surfaces of the PCB 210 including most of the electronic components, but it does not cover the upper surfaces of the heat sinks 212.

In an embodiment, the power module 200 includes conductive connectors 230, 240, 250, 252 and 254, that are partially integrally captured within the potting boat 202 during the molding process and portions of which extend out of the base body 206. Conductive connectors 230 and 240 are electrically connected to B+ and B- terminals of the battery pack 50, while connectors 250, 252 and 254 are connected to other battery pack terminals (e.g., thermistor line, voltage signal, communication signal, etc.). These features are described later in detail. The PCB 210 includes first conductive slots 218 (i.e., slot or through-hole including a conductive coating connected to a conductive trace of the PCB 210) proximate opposite sides edges thereof that receive upper tips of the conductive connectors 230 and 240 therein when the PCB 210 is mounted in place within the potting boat 202. Similarly, the PCB 210 includes second conductive slots 219 proximate rear edges thereof that receive upper tips of the conductive connectors 250, 252 and 254. In this manner, the PCB 210 is directly connected to B+ and B- power terminals and the signal lines of the battery pack 50. These power supply lines are connected through the PCB 210 to the two arrays of the power switches 211.

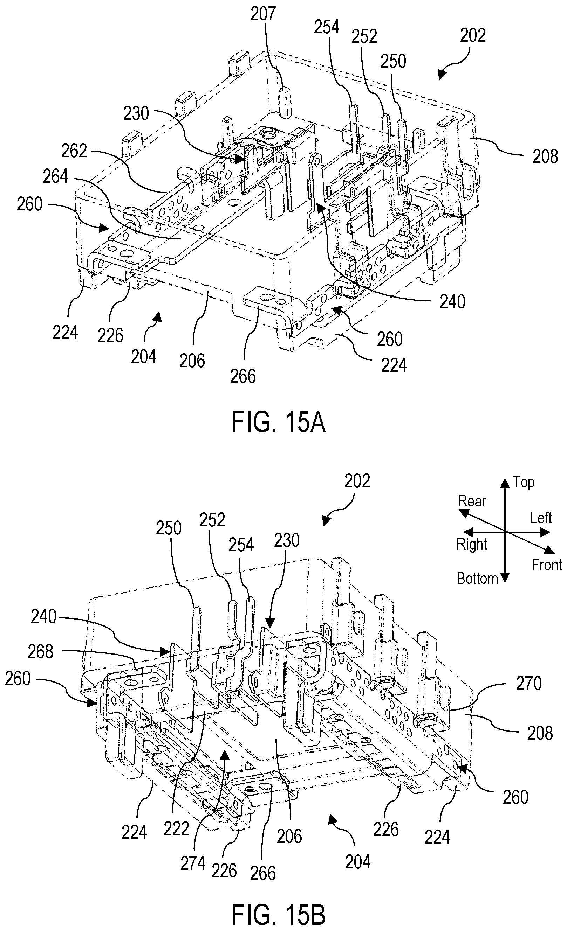

FIGs. 15A and 15B depict perspective views of the integrated power module with the potting boat being shown translucently, according to an embodiment.

As shown herein, the potting boat 202 and the battery interface 204 are insert-molded around the conductive connectors 230, 240, 250, 252 and 254 to allow the conductive connectors to extend directly from the terminal block 220 to the PCB 210. In addition, two stiffening inserts 260 are disposed within the mold structure of battery interface 204 to enhance the structural integrity of the rail walls 224 and the battery guide rails 226, as described in detail below.

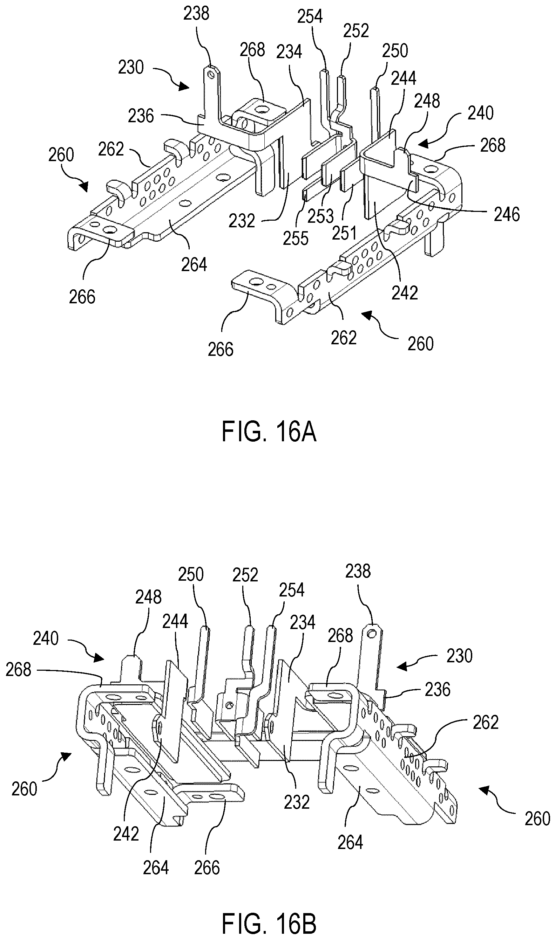

FIGs. 16A and 16B depict the conductive connectors 230, 240, 250, 252 and 254, and the stiffening inserts 160, of the integrated power module 200, according to an embodiment.

As shown in these figures, and with continued reference to FIGs. 6A-7B and 15A and 15B, the conductive connectors 230 and 240 of this embodiment are principally similar to connectors 230 and 240 of the first embodiment previously described, with some structural differences. Namely, the conductive connectors 230 and 240 are integrally coupled to battery terminals 232 and 242 of the terminal block 220 respectively. Conductive connectors 230 and 240 respectively include first portions 234 and 244 that extend upright from the battery terminals 232 and 242 through the terminal support body 222 within the potting boat 202; second portions 236 and 246 that extend substantially perpendicularly from upper ends of the first portions 234 and 244 above an upper surface of the base body 206 within the potting boat 202; and third portions 238 and 248 that extend upright and are received into the conductive slots 218 of the PCB 210. In an embodiment, second portions 236 and 246 are bent at approximately a 90-degree angle during the assembly process, as described later, which properly aligns upper tips of the third portions 238 and 248 with the conductive slots 218 of the PCB 210.

Similarly, conductive connectors 250, 252 and 254 are functionally similar to connectors 150 and 160 of the first embodiment previously described. In this embodiment, there are a greater number of signal terminals provided within the terminal block 220 than previously described with respect to the first embodiment, and thus the power module 200 accommodates a larger number of conductive connectors 250, 252 and 254 for connection to the PCB 200. This arrangement allows for a greater number of signal and data communication lines between the battery pack 50 and the power module 200. In an embodiment, the conductive connectors 250, 252 and 254 integrally extend in the upright direction from the corresponding battery terminals 251, 253 and 255, respectively, pass through the terminal support body 222 into the potting boat 202, and their upper tips are received within conductive slots 219 of the PCB 210 at locations substantially above the battery terminals 251, 253 and 255.

In an embodiment, the battery interface 204 additionally includes two stiffening inserts 260 that are insert-molded alongside the conductive connectors. The stiffening inserts 260 are made of metal such as steel and extend through the rail walls 224 and the battery guide rails 226 to increase the structural rigidity of the rail walls 224 and the battery guide rails 226 and protect them from breakage during drops. In an embodiment, the stiffening inserts 260 include side portions 262 that extend within the length of the side walls 242 of the battery interface 204 to increase the structural rigidity of the side walls 242; rail portions 264 that extend substantially perpendicularly inwardly from inner lower edges of the side portions 262 and within the length of the battery guide rails 226 to increase the structural rigidity of the battery guide rails 226; and front and rear tabs 266 and 268 that extend substantially perpendicularly inwardly from inner upper ends of the side portions 262 into the base body 206 of the potting boat 202 to structurally support the stiffening inserts 260.

In an embodiment, during the molding process, the stiffening inserts 260 and the conductive connectors 230, 240, 250, 252 and 254 are positioned within the mold machine in the orientation shown in Figs. 16A and 16B. In an embodiment, plastic or resin material is insert-molding around the stiffening inserts to form the rail walls 224 and the battery guide rails 226, and around portions of the conductive connectors and front and rear tabs 266 and 268 to form the base body 206. During this process, the base body 206 is formed with two openings 274 formed directly above the battery guide rails 226. In an embodiment, the openings 274 are approximately the same width and length as the battery guide rails 226. In some molding machines, these openings 274 are needed for passing of a molding arm of the machine to properly insert-mold the material around the upper and lower surfaces of the rail portions 264 to form the battery guide rails 226.

In an embodiment, to cover the openings 274 prior to pouring of potting compound 213 into the potting boat 202, a blocking insert member 290 is provided, as described here.

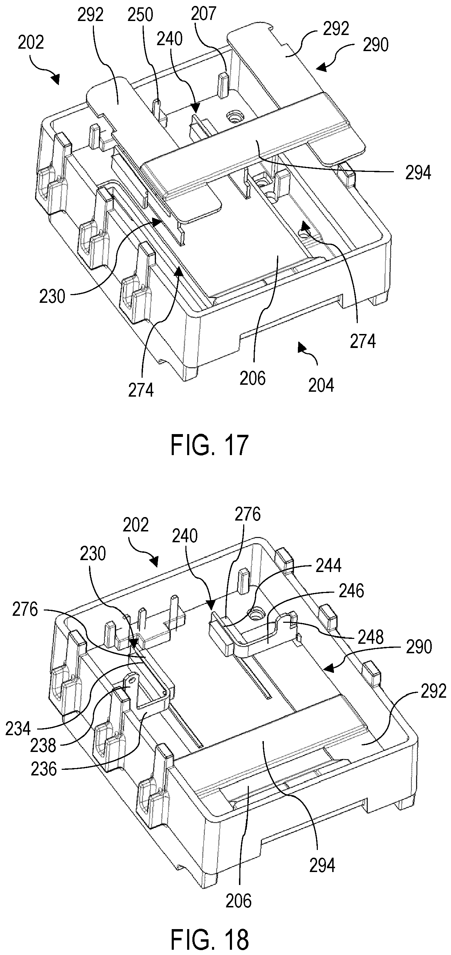

FIG. 17 depicts a partially-exploded view showing the blocking insert member 290 prior to being mounted within the potting boat 202, according to an embodiment. FIG. 18 depicts a perspective view of the potting boat 202 after the blocking insert member 290 is mounted, according to an embodiment.

In an embodiment, after the insert-molding process, the blocking insert member 290 is mounted within the potting boat 202 to block the openings 274. The blocking insert member 290 prevents leakage of potting compound 213 through the openings 274. In an embodiment, the blocking insert member 290 includes two insert portions 292 designed with the same geometry as the openings 274 configured to be plugged into the openings 274 to fully seal them from passage or leakage of potting compound 213. In an embodiment, the insert portions 292 are designed to form a substantially flush surface with the upper surface of the base body 206. The blocking insert member 290 further includes a link portion 294 that passes over the base body 206 linking the two insert portions 292.

In an embodiment, conductive connectors 230 and 240 are located inward of the openings 274 with respect to a center point of the base body 206. In an embodiment, each of the first portions 234 and 244 of the conductive connectors 230 and 240 is captured within a slot formed by two support pads 276 projecting from the base body 206. Initially, the second portions 236 and 246 extend in a straight orientation from the first portions 234 and 244, as shown in FIG. 17. This arrangement allows insert-molding of the top sides of the battery guide rails 226 via the openings 274 with the conductive connectors 230 and 240 in place. After the blocking insert member 290 is mounted to block the openings 274, the second portions 236 and 246 are bent outwardly at approximately 90-degree angles around the support pads 276 to cross laterally over the insert portions 292. This allows the third portions 238 and 248 of the conductive connectors 230 and 240 to be properly aligned with conductive slots 218 of the PCB 210.

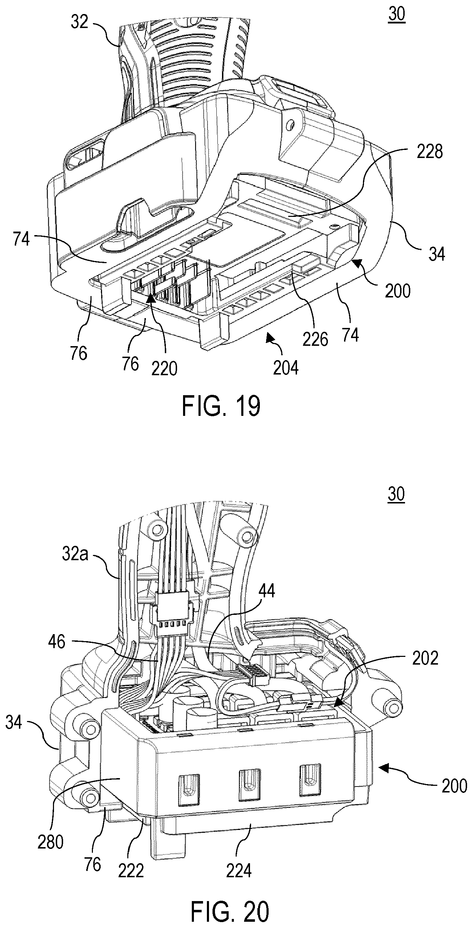

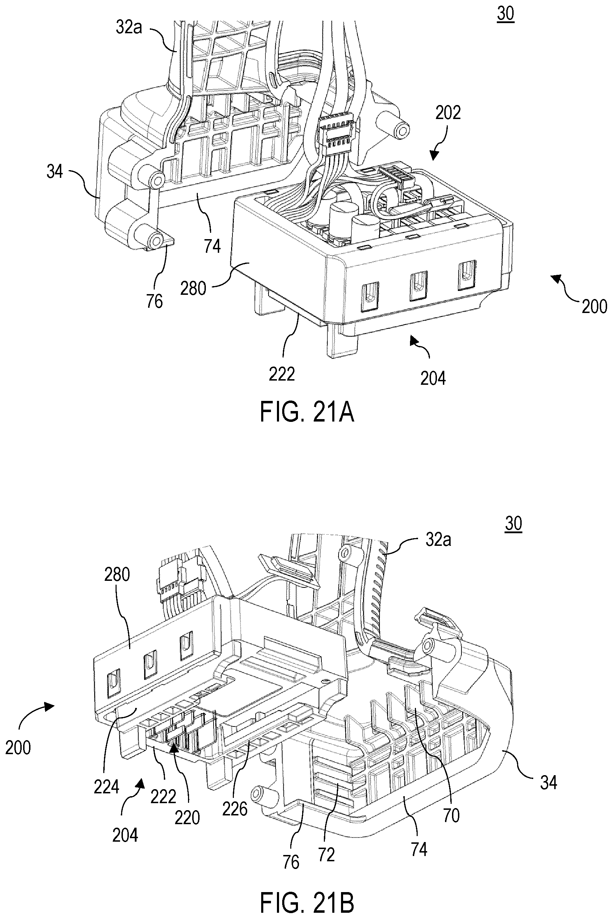

FIG. 19 depicts a lower perspective view of the battery receiving portion 34 of the power tool 30, according to an embodiment. FIG. 20 depicts a perspective view of the integrated power module 200 within the battery receiving portion 34, with only a rear housing half 32a of the power tool 30 shown, according to an embodiment. FIG. 21A and 21B depict exploded views of the integrated power module 200 relative to the rear housing half 32a, according to an embodiment.

In an embodiment, the potting boat 202 of the power module 200 has a greater surface area than at least a portion of the handle 32, but smaller than the battery receiving portion 34. In an embodiment, the potting boat 202 has an orientation that is substantially perpendicular to an axis of the handle 32 and substantially parallel to a receiving axis of the battery pack 50. It must be understood that depending on the power tool shape and specifications, integrated power module 200 may have a different size or orientation than the example shown in herein.

In an embodiment, battery receiving portion 34 includes interior ribs 70 and 72 within interior surfaces of each housing half arranged to securely engage the outer body of the vibration isolation element 280 to firmly hold the power module 200 within the battery receiving portion 34. The vibration isolation element 280 absorbs some level of the shock and vibration of the power tool 30 transferred through the interior ribs 70 and 72, but it is sufficiently rigid to affix the potting boat 202 within the battery receiving portion 34 with minimum movement or wobble. Furthermore, battery receiving portion 34 includes lower inwardly-projecting side support members 74 that extend beneath the lower side edge of the vibration isolation element 280 and come in contact with rail walls 224 of the battery interface 204, and a lower inwardly-projecting lateral support member 76 formed by the two housing halves that sits beneath the terminal support body 222 of the battery interface 204. This arrangement fully secures the power module 200 within the battery receiving portion 34. In an embodiment, the lower surfaces of the side support members 74, the lateral support 76, and the battery guide rails 226 are substantially flush along a single plane.

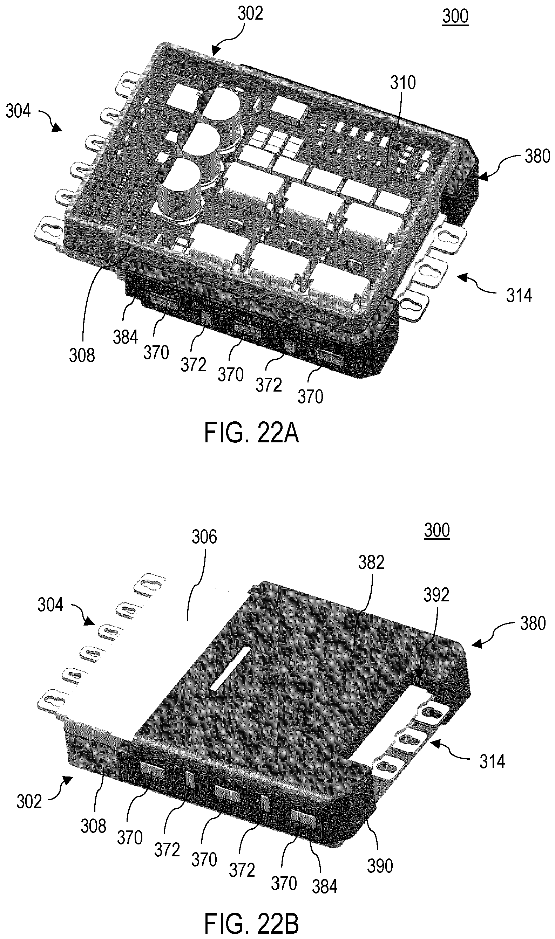

Another embodiment of the invention is described herein with reference to FIGs. 22A to 25. Here, a vibration isolation member is provided on a power module that is not integrated with a battery interface. The power module described herein may be mounted at any desired location of the power tool housing, including the battery receiving portion, the handle, the motor case, etc. In an embodiment, the vibration isolation member absorbs some level of impact and vibration exerted by the motor and/or the output member, and it protects the power module (including the switching components and other electronics therein) from damage due to high impact and vibration. These features are described here in detail.

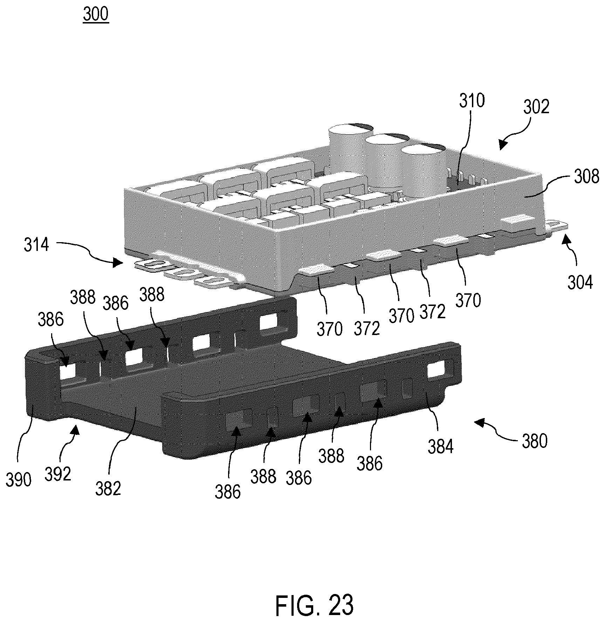

FIGs. 22A and 22B depicts perspective views of a power module 300 including a vibration isolation member 380, according to an embodiment of the invention. FIG. 23 depicts a partially exploded view of the vibration isolation member 380 relative to the power module 300, according to an embodiment.

As shown here, in an embodiment, power module 300 includes a module housing (also referred to as "potting boat") 302 including a base body 306 and exterior walls 308, and a circuit board 310 mounted within the potting boat 302. The circuit board 310 includes man of the same features as circuit boards 110 and 210 previously described, including a controller, power switches, heat sinks, capacitors, etc. A description of these features is not repeated here. The potting boat 302 receives input terminals 304 and outputs output terminals 314. The potting boat 302 integrally includes conductive connectors therein, e.g., within the base body 306, that connect the circuit board 310 to the input and output terminals 304 and 314.

In an embodiment, the vibration isolation member 380 may be made of resilient deformable material, for example, a thermoplastic elastomer (TPE), rubber material, or other plaint, compliant, flexible material to absorb shock and vibration imparted by the power tool output member, the transmission and/or impact assembly, and/or the motor. In this manner, the vibration isolation member 380 protects the components of the switching and control circuitry from damage due to excessive shock and vibration.

In an embodiment, the vibration isolation member 380 is designed to wrap around at least portions of at least three of the four exterior walls 308 of the potting boat 302. In an embodiment, vibration isolation member 380 includes a base portion 382 arranged to cover a bottom surface of the base body 306 (i.e., the surface opposite the circuit board 310), and two side portions 384 that extend from the base portion 382 and abuts two side walls of the exterior walls 308. The side walls include side protrusions 370 and 372 projecting laterally therefrom, and the side portions 384 include corresponding receptacles 386 and 388 that tightly receive the side protrusions 370 and 372 to secure the vibration isolation member 380 to the potting boat 302. Further, in an embodiment, the vibration isolation member 380 includes a lateral portion 390 that extends from the base portion 282 and abuts a rear lateral wall of the exterior walls 308. The lateral portion 390 includes an opening 392 through which the output terminals 314 pass. When the power module 300 and the vibration isolator 380 are together secured within the tool housing (or one or more ribs of the tool housing designed to securely hold these components), this arrangement allows for six degrees of movement of the power module 300 about the X (rear-front), Y (left-right) and Z (top-down) axes, to fully protect the module components from excessive vibration and impact produced by the power tool in any direction.

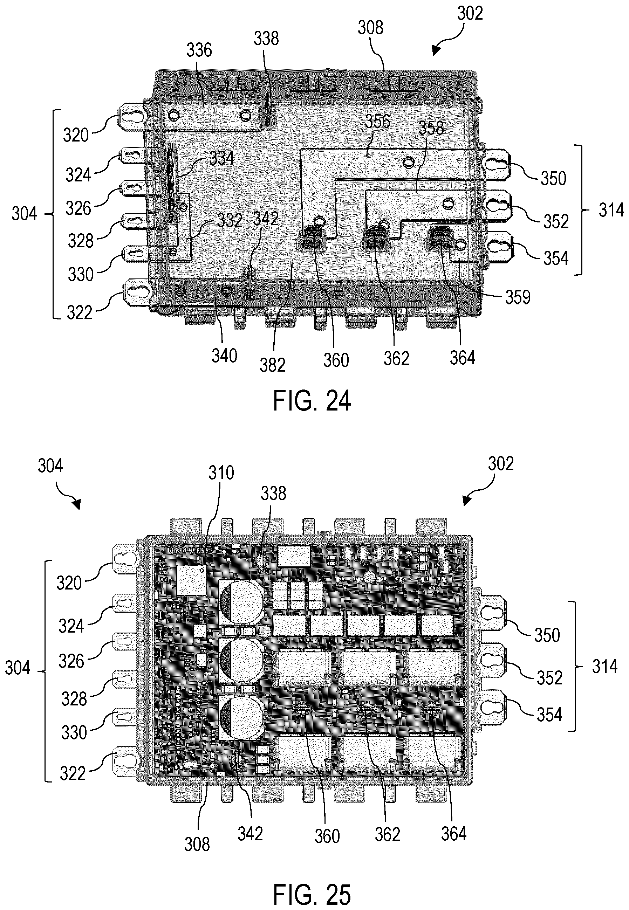

FIG. 24 depicts a perspective view of the power module 300 including the potting boat 302 shown translucently to expose conductive connectors therein, according to an embodiment. FIG. 25 depicts a top view of the potting boat 302 including the circuit board 310 connected to the conductive connectors, according to an embodiment.

In an embodiment, output terminals 314 include three output portions 350, 352, and 354 that project out of the potting boat 302 for coupling to power wires (e.g., power wires 44 in FIG. 9) routed to the motor; three connector portions 356, 358 and 359 that are insert-molded within the base body 382 of the potting boat 302 and extend from the output portions 350, 352, and 354 respectively; and three posts 360, 362 and 364 extending upright from the connector portions 356, 358 and 359 respectively and are received into corresponding conductive slots of the circuit board 310. In this manner, the phase voltage outputs of the inverter circuit of the circuit board 310 is outputted via the output terminals 314. Reference is made to US Patent Publication No. 2022/0247280 for a detailed description of a similar insert-molded output terminal arrangement.

In an embodiment, input terminals 304 are similarly insert-molded into the potting boat for connection to the desired locations of the circuit board 310. Here, input terminals 304 include output portions 320 and 322 extending out of the potting boat 302 to be respectively wired to B+ and B- nodes of the battery pack, and output portions 324, 326, 328 and 330 extending out of the potting boat 302 to be wired to one or more signal nodes (e.g., thermistor, split-stack voltage, ID, etc.) of the battery pack. In an embodiment, connector portions 336 and 340 extend from the output portions 320 and 322 and pass through the base body 382 of the potting boat 302 (e.g., via the above-described insert-molding process), and posts 338 and 342 extend upright therefrom and are received into corresponding conductive slots of the circuit board 310. Similarly, one or more connector portions 332 extend from the output portions 324, 326, 328 and 330 into the potting boat 302 (at least partially through the base body 382), and posts 334 extend upright therefrom and are received into corresponding conductive slots of the circuit board 310 to provide battery signals directly to the circuit board 310. In this manner, input power and signal wires from the battery pack are provided to the circuit board 310 via connectors that are insert-molded into the potting boat 302, without a need for routing and connecting any wires to the circuit board 310. This arrangement significantly increases manufacturing reliability.

The foregoing description of the embodiments has been provided for purposes of illustration and description. It is not intended to be exhaustive or to limit the disclosure. Individual elements or features of a particular embodiment are generally not limited to that particular embodiment, but, where applicable, are interchangeable and can be used in a selected embodiment, even if not specifically shown or described. The same may also be varied in many ways. Such variations are not to be regarded as a departure from the disclosure, and all such modifications are intended to be included within the scope of the disclosure.

The terminology used herein is for the purpose of describing particular example embodiments only and is not intended to be limiting. As used herein, the singular forms "a," "an," and "the" may be intended to include the plural forms as well, unless the context clearly indicates otherwise. The terms "comprises," "comprising," "including," and "having," are inclusive and therefore specify the presence of stated features, integers, steps, operations, elements, and/or components, but do not preclude the presence or addition of one or more other features, integers, steps, operations, elements, components, and/or groups thereof. The method steps, processes, and operations described herein are not to be construed as necessarily requiring their performance in the particular order discussed or illustrated, unless specifically identified as an order of performance. It is also to be understood that additional or alternative steps may be employed.

When an element or layer is referred to as being "on," "engaged to," "connected to," or "coupled to" another element or layer, it may be directly on, engaged, connected or coupled to the other element or layer, or intervening elements or layers may be present. In contrast, when an element is referred to as being "directly on," "directly engaged to," "directly connected to," or "directly coupled to" another element or layer, there may be no intervening elements or layers present. Other words used to describe the relationship between elements should be interpreted in a like fashion (e.g., "between" versus "directly between," "adjacent" versus "directly adjacent," etc.). As used herein, the term "and/or" includes any and all combinations of one or more of the associated listed items.

Although the terms first, second, third, etc. may be used herein to describe various elements, components, regions, layers and/or sections, these elements, components, regions, layers and/or sections should not be limited by these terms. These terms may be only used to distinguish one element, component, region, layer or section from another region, layer or section. Terms such as "first," "second," and other numerical terms when used herein do not imply a sequence or order unless clearly indicated by the context. Thus, a first element, component, region, layer or section discussed below could be termed a second element, component, region, layer or section without departing from the teachings of the example embodiments.

Spatially relative terms, such as "inner," "outer," "beneath," "below," "lower," "above," "upper," "bottom," "lower," and the like, may be used herein for ease of description to describe one element or feature's relationship to another element(s) or feature(s) as illustrated in the figures. Spatially relative terms may be intended to encompass different orientations of the device in use or operation in addition to the orientation depicted in the figures. For example, if the device in the figures is turned over, elements described as "below" or "beneath" other elements or features would then be oriented "above" the other elements or features. Thus, the example term "below" can encompass both an orientation of above and below. The device may be otherwise oriented (rotated 90 degrees or at other orientations) and the spatially relative descriptors used herein interpreted accordingly.

## Claims

1. A power tool comprising:
a tool housing including a battery receiving portion arranged to removably receive a battery pack therein;
a motor disposed within the tool housing; and
a power module disposed at or proximate the battery receiving portion, comprising:
a module housing having a base body, a plurality of exterior walls extending from a first surface of the base body, and a terminal support body formed integrally on a second surface of the base body opposite the plurality of exterior walls;
a circuit board mounted within the plurality of exterior walls of the module housing and including an inverter circuit electrically coupled to the motor; and
a plurality of conductive connectors forming a plurality of terminals supported by the terminal support body arranged to make an electrical connection with a plurality of battery terminals the battery pack, wherein the plurality of conductive connectors extends through the terminal support body and is electrically coupled to the circuit board to supply power from the battery pack to the inverter circuit.

2. The power tool of claim 1, wherein the plurality of conductive connectors comprises first portions that extend from the plurality of terminals through the terminal support body substantially perpendicular to the base body, second portions that extend from the first portions through the base body or over the first surface of the base body, and third portions that extend form the second portions and are coupled directly to the circuit board.

3. The power tool of claim 2, wherein the circuit board comprises a plurality of conductive slots that receive the third portions of the plurality of conductive connectors therein.

4. The power tool of claim 2 or 3, wherein the module housing is insert-molded to fully cover at least the second portions of the plurality of conductive connectors.

5. The power tool of any of claims 2 to 4, wherein the inverter circuit comprises a first plurality of power switches mounted on the circuit board along a first array and a second plurality of power switches mounted on the circuit board along a second array, wherein the circuit board further comprises a first conductive slot therein that couples one of the plurality of conductive connectors to the first plurality of power switches, and a second conductive slot therein that couples another one of the plurality of conductive connectors to the second plurality of power switches.

6. The power tool of any of claims 2 to 5, wherein the second portions pass at least partially over the base body and include angled portions to locate the third portions near the plurality of exterior walls.

7. The power tool of any preceding claim, wherein the base body includes at least one opening therein formed to facilitate a molding of at least one component formed on the second surface thereof, further comprising a blocking insert member mounted within the module housing to cover the at least one opening, and a potting compound disposed within the module housing to cover both surfaces of the circuit board.

8. The power tool of any preceding claim, wherein the terminal support body is oriented along a plane that extends substantially perpendicularly from the second surface of the main body proximate a distal end thereof.

9. The power tool of any preceding claim, wherein the module housing further comprises two battery guide rails formed integrally on the second surface of the base body, the guide rails being arranged to slidingly support the battery pack along an insertion axis.

10. The power tool of claim 9, wherein the module housing further comprises a catch member formed integrally in the second surface of the base body, the catch member being arranged to engage a latch of the battery pack to releasably lock the battery pack within the battery receiving portion.

11. The power tool of claim 9 or 10, further comprising two stiffening inserts around which the two battery guide rails are molded.

12. The power tool of claim 11, wherein the stiffening inserts comprise side portions located proximate side edges of the base body, rail portions that extend inwardly from the side portions into the battery guide rails, and tab portions that extend inwardly from the side portions into the base body.

13. The power tool of any preceding claim, further comprising a vibration isolation element comprising resiliently deformable material mounted between an interior surface of the battery receiving portion and at least a portion of the module housing to allow relative movement between the power module and the tool housing.
